# EUROPEAN PATENT APPLICATION

(11) **EP 3 328 030 A1**
(43) Date of publication of application: **30.05.2018**
(21) Application number: 17155192.2
(22) Date of filing: 08.02.2017
(51) Int. Cl.: H04L 29/08, G06Q 50/00

(54) **TIERED INFRASTRUCTURE FOR HANDLING DATA**

(30) Priority: 23.11.2016 US 201615360436; 26.01.2017 WO PCT/US2017/015145
(71) Applicant: Facebook, Inc., Menlo Park, CA 94025 (US)
(72) Inventor: PARIKH, Jay, Menlo Park, CA California 94025 (US); JIA, Hongzhong, Menlo Park, CA California 94025 (US)
(74) Representative: Schröer, Gernot H.

(57) **Abstract**

The disclosure is directed to receiving a digitized content item that is indicated to be shared with users (e.g., all, some, or one) of a social networking system; selecting, based on one or more characteristics of the digitized content item, a second server computing device at which to further compute or store the digitized content item; and transmitting, to the second computing device, the digitized content item for storage at the second computing device. At least one of the characteristics can be a classification of a user who transmitted the digitized content item via the data communications network. By selecting second server computing devices based on characteristics, data communications network performance can be improved.

## Description

### BACKGROUND

Social networking systems enable a very large number of users (e.g., a billion users or more) to share data worldwide. To support this data sharing, the social networking systems have multiple data centers that are distributed around the world. The multiple data centers enable the data to be distributed worldwide, e.g., to back up data or to store data near where the data will be consumed. Each of these data centers typically has a very large number of server computing devices. The server computing devices may be assigned various roles, e.g., compute, data storage, web site, etc.

Various specialized roles of server computing devices may be centrally located. As an example, server computing devices that transcode content from one content type to another (e.g., video in one format to video in a different format) may be centrally located.

Data centers may be built based on various requirements and constraints. Data centers in developed countries can be large, where power and land are available. In countries where power and land are less available or there is a regulation concern, data centers may be smaller. Because larger data centers are easier to manage and provide superior scalability, they are preferred and tend to be built in a handful of locations. On the other hand, for flexibility and nimbleness, small data centers are preferred and they are built in many places wherever there are users of the social networking system. As a result, the infrastructure for a social networking systems may have various sizes of data centers that are geographically dispersed. In typical data center environments, data is stored wherever there is capacity. However, social networks have specific characteristics of usage. As an example, content generated by some users (e.g., celebrity users) may be more widely consumed than content generated by other users (e.g., common users). When a server computing device is selected for storing the generated content merely based on where there is capacity, consumers of data who are not located proximate to where the data is stored may experience various network delays before they can view or otherwise consume the stored data. These delays can occur, e.g., because of network bandwidth and latency issues between data centers or between the data center storing the data and the user who is requesting to consume (e.g., view or otherwise cause to be rendered) the stored data. Even if network bandwidth can be improved between data centers or users, such improvements can be expensive. Thus, determining where to locate data storage and computation resources can be useful.

### SUMMARY OF PARTICULAR EMBODIMENTS

Embodiments according to the invention are in particular disclosed in the attached claims directed to a method, a storage medium and a system, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a method performed by a computing device, comprises:
receiving, via a data communications network at a first server computing device, a digitized content item that is indicated to be shared with users of a social network system;
selecting, based on one or more characteristics of the digitized content item, a second server computing device at which to further compute or store the digitized content item, wherein at least one of the characteristics is a classification of a user who transmitted the digitized content item via the data communications network; and
transmitting, to the second computing device, the digitized content item for storage at the second computing device.

In an event the user is classified as a celebrity user, the selecting may comprise selecting the second server computing device at a higher tier than if the user is classified as a general user.

The selecting may be performed nearly contemporaneously with the receiving.

In an embodiment according to the invention, a method may comprise transcoding, at a third computing device proximate to the second server computing device, the digitized content item prior to storage of the digitized content item.

The classification may be a function of a number of friend connections the user has in a social graph.

The selecting may include evaluating the internet protocol address of the computing device from which the digitized content item was received.

In an embodiment according to the invention, a computer-readable storage device storing instructions, the instructions may comprise:
instructions for receiving, via a data communications network at a first server computing device, a digitized content item that is indicated to be shared with users of a social network system;
instructions for selecting, based on one or more characteristics of the digitized content item, a second server computing device at which to further compute or store the digitized content item, wherein at least one of the characteristics is a classification of a user who transmitted the digitized content item via the data communications network; and
instructions for transmitting, to the second computing device, the digitized content item for storage at the second computing device.

In an event the user is classified as a celebrity user, the selecting may comprise selecting the second server computing device at a higher tier than if the user is classified as a general user.

The selecting may be performed nearly contemporaneously with the receiving.

In an embodiment according to the invention, a computer-readable storage device may comprise instructions for transcoding, at a third computing device proximate to the second server computing device, the digitized content item prior to storage of the digitized content item.

The classification may be a function of a number of friend connections the user has in a social graph.

The instructions for selecting may comprise instructions for evaluating the internet protocol address of the computing device from which the digitized content item was received.

In an embodiment according to the invention, a system may comprise:
a component configured to receive, via a data communications network at a first server computing device, a digitized content item that is indicated to be shared with users of a social networking system;
a component configured to select, based on one or more characteristics of the digitized content item, a second server computing device at which to further compute or store the digitized content item, wherein at least one of the characteristics is a classification of a user who transmitted the digitized content item via the data communications network; and
a component configured to transmit, to the second computing device, the digitized content item for storage at the second computing device.

In an event the user is classified as a celebrity user, the second server computing device may be selected at a higher tier than if the user is classified as a general user.

The second server computing device may be selected nearly contemporaneously with the receiving.

In an embodiment according to the invention, a system may comprise a component configured to transcode, at a third computing device proximate to the second server computing device, the digitized content item prior to storage of the digitized content item.

The classification may be a function of a number of friend connections the user has in a social graph.

The second server computing device may be selected based on an evaluation of the internet protocol address of the computing device from which the digitized content item was received.

In an embodiment according to the invention, one or more computer-readable non-transitory storage media embody software that is operable when executed to perform a method according to the invention or any of the above mentioned embodiments.

In an embodiment according to the invention, a system comprises: one or more processors; and at least one memory coupled to the processors and comprising instructions executable by the processors, the processors operable when executing the instructions to perform a method according to the invention or any of the above mentioned embodiments.

In an embodiment according to the invention, a computer program product, preferably comprising a computer-readable non-transitory storage media, is operable when executed on a data processing system to perform a method according to the invention or any of the above mentioned embodiments.

### BRIEF DESCRIPTION OF THE DRAWINGS

- FIG. 1: is a block diagram illustrating an environment in which a tiered data storage architecture can be implemented, consistent with various embodiments.
- FIG. 2: is a block diagram of an example implementation of tiers, consistent with various embodiments.
- FIG. 3: is a flow diagram illustrating processing of content items that are uploaded to the system illustrated in FIG. 1, consistent with various embodiments.
- FIG. 4: is a block diagram of a server of FIG. 1, consistent with various embodiments.

### DETAILED DESCRIPTION

The disclosure is directed to a tiered infrastructure for handling data based on consumption characteristics. In various embodiments, a first server computing device of a social networking system receives, via a data communications network, a digitized content item that is indicated to be shared with users (e.g., all or a subset of users) of the social networking system. A server selection engine can then select, based on one or more characteristics of the digitized content item, a second server computing device at which to further compute and/or store the digitized content item. At least one of the characteristics can be a classification of a user who transmitted the digitized content item via the data communications network. The further computation can be, for example, to transcode video files from one format to a different format. The selection engine can then transmit, to the second computing device, the digitized content item for further computation and/or storage at the second computing device. In some embodiments, the content item can be large content that occupies a lot of networking bandwidth when it is transmitted, e.g., video.

The selection engine can select the second server computing device based on a classification of the user from whom the content item was received. As an example, if the content item was received from a celebrity, the selection engine can select a second server computing device that is at a higher tier than if the user is classified as a general user. By selecting a higher tier, the content item is made more widely available directly, e.g., to multiple downstream server computing devices (e.g., nodes in a hierarchy). In various embodiments, the selection engine can operate at near real time, e.g., contemporaneously with receiving the content items.

In some embodiments, the selection engine may first transmit the content item to a third server so that the third server can transcode the received content item the content item is stored at the second server computing device.

In some embodiments, the selection engine may select a classification as a function of a number of friend connections the user who uploaded the content item has in a social graph. As an example, the more the users, the higher the selected tier for the second server computing device. As a further refinement, the tier can be selected based on the geographic proximity of the user's friends in the social network. In other words, the social networking system assumes that the content item will be consumed by friends of the user. In some embodiments, the selection engine evaluates the Internet Protocol (IP) address of the computing device from which the digitized content item was received to select a nearby second server computing device at which the content item should be stored.

Thus, the server computing devices and the data centers may belong to one or more tiers, wherein the tiers may be distributed based on geography or function. The selection engine can select an appropriate tier to minimize (or otherwise optimize) the bandwidth consumption that would be caused when the content item is consumed, e.g., by friends indicated in the social networking system for the user who uploaded the content item.

The selection engine can select where to allocate computing or storage resources based on various rules. For example, for a live video streaming application, if the data uploaded by a celebrity and there are typically a large number of viewers around the world, leveraging compute/storage resources in a large data center may be preferred because there may be more resources available there and the data will be viewed around the world to be viewed by users worldwide. If the video is from a general user with most friends located in a local region, then a nearby data center would be preferred because the video will typically be viewed by local users.

In various embodiments, the rules the selection engine evaluates and responds to may be dynamically updated. For example, a general user's data (e.g. video stream) may become viral (meaning that it is being viewed by increasing numbers of users) and so it is then preferred to be computed or stored in a larger datacenter instead of a nearby datacenter.

In various embodiments, for a particular content item (e.g., video stream), the selection engine can select one data center for transcoding or otherwise processing it (e.g., assigning compute resources) and a different data center for storing it. As an example, the selection engine may select a data center that presently has more compute resources available for quickly processing the content item, and then a different data center to store it closer to users who will likely view the content item. As another example, the selection engine may select multiple data centers if redundancy is needed (e.g., for content items that are important or will be viewed by many users worldwide).

The objectives for the selection engine can be different, e.g., at different times or in different scenarios. As examples, to optimize for cost a more economical data center may be initially assigned; to reduce data communications latency, the closest data center may be assigned first; to balance network load, multiple data centers that are geographically dispersed may initially be assigned. One skilled in the art will recognize that other modifications may be made.

Thus, in various embodiments, the selection engine and associated components can determine or predict network traffic to select tiers having computing devices that are identified for computation and/or storage purposes. For the selection engine to select tiers (also "layers") to use for computing and/or storing digitized content, the engine can analyze the network address (e.g., IP address_ of the originating user (e.g., the user who is generating the network traffic such as by uploading video) and the network addresses of the consuming users (e.g., the users who are consuming the network traffic such as watching the videos). In some embodiments, the selection engine determines if most of the IP addresses are in a common geographical location or region. If so, the selection engine selects tiers that are in or proximate to that location. Proximity can be determined, e.g., as geographical proximity or network proximity (e.g., number of network hops). By selecting tiers that are proximate to the users, the selection engine reduces the consumed network bandwidth reduction and also reduces the networking latency.

In some embodiments, the selection engine can make its selections based on a "real-time" analysis of user activities. As examples, some users of a social network may not be consuming digitized content during portions of the day (e.g., during late nights) because they are offline whereas other social network users may just be coming online and so may begin consuming digitized content. The selection engine can retrieve in real time the IP addresses of all the users who are consuming the digitized content and then make an adjustment on which tiers should be selected, e.g., to minimize network bandwidth usage and latencies. Furthermore, the selection engine can also see if the IP addresses of the users can be grouped (e.g., into a few different "buckets") and all the users in each group are located close to each other geographically. If so, one or more separate tiers can be selected and used to compute and store the digitized content.

By selecting tiers in this manner, network utilization can be reduced because (1) the computation or storage "work" is performed proximate to end users (instead of traveling over long distances across network links); (2) performance is improved and latency for end users to access digitized content items is minimized; and (3) the social networking infrastructure can be more flexible because where electrical or computational power is abundant, large data centers can be built and where electrical or power is limited or regulation is tight, small data centers can be built. These improvements make the expansion of the infrastructure (e.g., using multiple data centers) much more flexible than previously possible.

### ENVIRONMENT

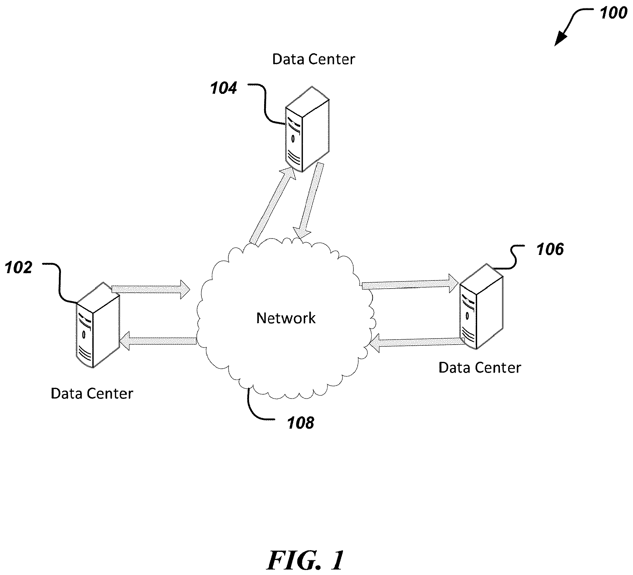

Turning now to the figures, FIG. 1 is a block diagram illustrating an environment 100 in which tiered data storage architecture can be implemented. The tiered architecture may be used to store data across various storage layers, *e.g*., to increase the efficiency of data storage. One or more data centers 102, 104, and 106 may be interconnected via a network 108 (e.g., the Internet). The data centers may be tiered. Alternatively, servers within the data centers (not illustrated) may be tiered. Tiering can be performed at a geographic or functional level. The higher the tier for a computing device, the more downstream devices in the network the computing device directly communicates with. In various embodiments, data centers 102, 104, and 106 can have different "sizes," meaning number and types of server computing devices, networking resources, etc.

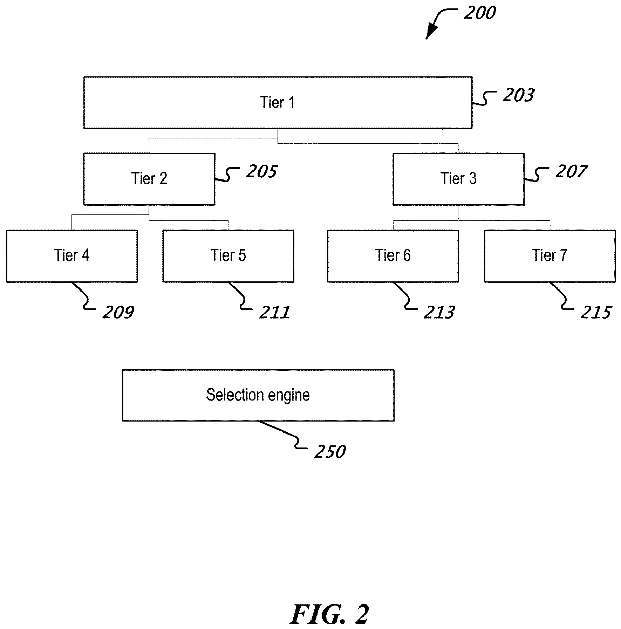

FIG. 2 is a block diagram of an example implementation of tiers, consistent with various embodiments. The implementation 200 includes a top-level tier 203 that services tiers 205 and 207. Tier 205 services tiers 209 and 211, and tier 207 services tiers 213 and 215. The lowest-level tiers 209, 211, 213, and 215 may each service users or other tiers. Because of this tiered relationship, data is stored or provided by a higher tier, it is available to more users than when it stored at a lower tier. However, additional network hops may be required to consume data stored at higher tiers. In contrast, when data is not stored in the direct path between the user and the top-level tier, the data may have to transit even more tiers. As an example, when a user associated with tier 209 requests data that is stored at tier 207, the data may need to transit tiers 203 and 205 before arriving at tier 209. In contrast, if that data was to be stored at tier 205, it would only have to transit tier 209 before arriving at the user's computing device.

The illustrated implementation 200 also includes one or more selection engines 250. The selection engines can select a tier (or server computing device within a tier) at which uploaded data items should be stored. The selection engine can receive, store, and evaluate various "rules." These rules can evaluate various characteristics, e.g., location of users, type of content, number of friend connections for the user who is uploading the content item, etc. The evaluation can indicate which tier or server computing device the content item should be stored at. By selecting an appropriate server computing device or tier, the selection engine attempts to reduce the amount of network bandwidth and hops required to service requests for content items.

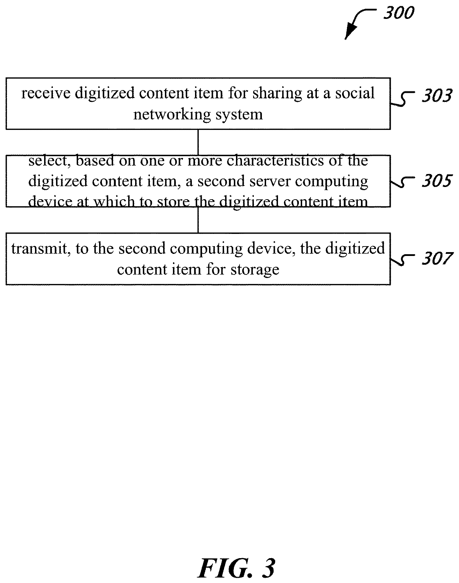

FIG. 3 is a flow diagram illustrating processing of content items that are uploaded to the system illustrated in FIG. 1, consistent with various embodiments. At block 303 of the illustrated routine 300, when a content item is uploaded by a user, it is received and processed. At block 305, e.g., as may be performed by a selection engine, a server computing device and/or a tier is selected for storage of the content item. The selection can be based on various characteristics, e.g., pertaining to the content item or the user who uploaded it. As an example, based on the IP address of the user who uploaded the content item, the number of friends the user has, or the celebrity status of the user, the content item may be stored at various tier levels. At block 307, the content item is transmitted to the selected server computing device or tier for storage.

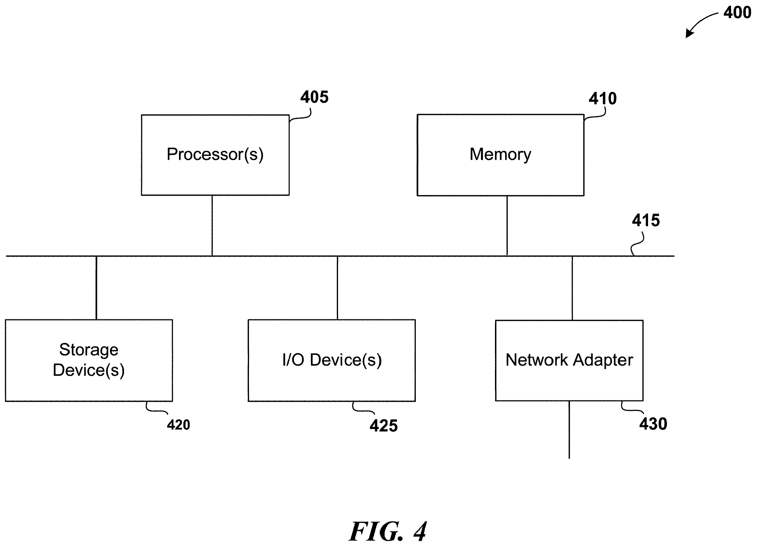

FIG. 4 is a block diagram of a server of FIG. 1, consistent with various embodiments. The computing system 400 may be used to implement any of the entities, components or services depicted in the examples of Figures 1-7 (and any other components described in this specification). The computing system 400 may include one or more central processing units ("processors") 405, memory 410, input/output devices 425 (e.g., keyboard and pointing devices, display devices), storage devices 420 (*e.g.,* disk drives), and network adapters 430 (*e.g.,* network interfaces) that are connected to an interconnect 415. The interconnect 415 is illustrated as an abstraction that represents any one or more separate physical buses, point to point connections, or both connected by appropriate bridges, adapters, or controllers. The interconnect 415, therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (I2C) bus, or an Institute of Electrical and Electronics Engineers (IEEE) standard 1394 bus, also called "Firewire".

The memory 410 and storage devices 420 are computer-readable storage media that may store instructions that implement at least portions of the described technology. In addition, the data structures and message structures may be stored or transmitted via a data transmission medium, such as a signal on a communications link. Various communications links may be used, such as the Internet, a local area network, a wide area network, or a point-to-point dial-up connection. Thus, computer-readable media can include computer-readable storage media (e.g., "non-transitory" media) and computer-readable transmission media.

The instructions stored in memory 410 can be implemented as software and/or firmware to program the processor(s) 405 to carry out actions described above. In some embodiments, such software or firmware may be initially provided to the processing system 400 by downloading it from a remote system through the computing system 400 (*e.g.,* via network adapter 430).

The technology introduced herein can be implemented by, for example, programmable circuitry (*e.g*., one or more microprocessors) programmed with software and/or firmware, or entirely in special-purpose hardwired (non-programmable) circuitry, or in a combination of such forms. Special-purpose hardwired circuitry may be in the form of, for example, one or more ASICs, PLDs, FPGAs, etc.

### REMARKS

The above description and drawings are illustrative and are not to be construed as limiting. Numerous specific details are described to provide a thorough understanding of the disclosure. However, in some instances, well-known details are not described in order to avoid obscuring the description. Further, various modifications may be made without deviating from the scope of the embodiments. Accordingly, the embodiments are not limited except as by the appended claims.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. Terms that are used to describe the disclosure are discussed below, or elsewhere in the specification, to provide additional guidance to the practitioner regarding the description of the disclosure. For convenience, some terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way. One will recognize that "memory" is one form of a "storage" and that the terms may on occasion be used interchangeably.

Consequently, alternative language and synonyms may be used for any one or more of the terms discussed herein, nor is any special significance to be placed upon whether or not a term is elaborated or discussed herein. Synonyms for some terms are provided. A recital of one or more synonyms does not exclude the use of other synonyms. The use of examples anywhere in this specification including examples of any term discussed herein is illustrative only, and is not intended to further limit the scope and meaning of the disclosure or of any exemplified term. Likewise, the disclosure is not limited to various embodiments given in this specification.

Those skilled in the art will appreciate that the logic illustrated in each of the flow diagrams discussed above, may be altered in various ways. For example, the order of the logic may be rearranged, substeps may be performed in parallel, illustrated logic may be omitted; other logic may be included, etc.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions will control.

## Claims

1. A method performed by a computing device, comprising:
receiving, via a data communications network at a first server computing device, a digitized content item that is indicated to be shared with users of a social network system;
selecting, based on one or more characteristics of the digitized content item, a second server computing device at which to further compute or store the digitized content item, wherein at least one of the characteristics is a classification of a user who transmitted the digitized content item via the data communications network; and
transmitting, to the second computing device, the digitized content item for storage at the second computing device.

2. The method of claim 1, wherein in an event the user is classified as a celebrity user, the selecting comprises selecting the second server computing device at a higher tier than if the user is classified as a general user.

3. The method of claim 1 or 2, wherein the selecting is performed nearly contemporaneously with the receiving.

4. The method of any of claims 1 to 3, further comprising transcoding, at a third computing device proximate to the second server computing device, the digitized content item prior to storage of the digitized content item.

5. The method of any of claims 1 to 4, wherein the classification is a function of a number of friend connections the user has in a social graph.

6. The method of any of claims 1 to 5, wherein the selecting further includes evaluating the internet protocol address of the computing device from which the digitized content item was received.

7. A computer-readable storage device storing instructions, the instructions comprising:
instructions for receiving, via a data communications network at a first server computing device, a digitized content item that is indicated to be shared with users of a social network system;
instructions for selecting, based on one or more characteristics of the digitized content item, a second server computing device at which to further compute or store the digitized content item, wherein at least one of the characteristics is a classification of a user who transmitted the digitized content item via the data communications network; and
instructions for transmitting, to the second computing device, the digitized content item for storage at the second computing device.

8. The computer-readable storage device of claim 7, wherein in an event the user is classified as a celebrity user, the selecting comprises selecting the second server computing device at a higher tier than if the user is classified as a general user.

9. The computer-readable storage device of claim 7 or 8, wherein the selecting is performed nearly contemporaneously with the receiving.

10. The computer-readable storage device of any of claims 7 to 9, further comprising instructions for transcoding, at a third computing device proximate to the second server computing device, the digitized content item prior to storage of the digitized content item.

11. The computer-readable storage device of any of claims 7 to 10, wherein the classification is a function of a number of friend connections the user has in a social graph.

12. The computer-readable storage device of any of claims 7 to 11, wherein the instructions for selecting further comprises instructions for evaluating the internet protocol address of the computing device from which the digitized content item was received.

13. A system, comprising:
a component configured to receive, via a data communications network at a first server computing device, a digitized content item that is indicated to be shared with users of a social networking system;
a component configured to select, based on one or more characteristics of the digitized content item, a second server computing device at which to further compute or store the digitized content item, wherein at least one of the characteristics is a classification of a user who transmitted the digitized content item via the data communications network; and
a component configured to transmit, to the second computing device, the digitized content item for storage at the second computing device.

14. The system of claim 13, wherein in an event the user is classified as a celebrity user, the second server computing device is selected at a higher tier than if the user is classified as a general user; and/or
wherein the second server computing device is selected nearly contemporaneously with the receiving; and/or
wherein the classification is a function of a number of friend connections the user has in a social graph; and/or
wherein the second server computing device is selected based on an evaluation of the internet protocol address of the computing device from which the digitized content item was received.

15. The system of claim 13 or 14, further comprising a component configured to transcode, at a third computing device proximate to the second server computing device, the digitized content item prior to storage of the digitized content item.
